(19) Europäisches Patentamt
European Patent Office
Office européen des brevets

(11) **EP 2 915 572 A1**

(12) **EUROPEAN PATENT APPLICATION**
published in accordance with Art. 153(4) EPC

(43) Date of publication:
**09.09.2015 Bulletin 2015/37**

(51) Int Cl.:
**B01D 39/20** (2006.01)     **B01D 46/00** (2006.01)
**C04B 38/00** (2006.01)     **F01N 3/022** (2006.01)

(21) Application number: **13850580.5**

(22) Date of filing: **01.11.2013**

(86) International application number:
**PCT/JP2013/079786**

(87) International publication number:
**WO 2014/069643 (08.05.2014 Gazette 2014/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **01.11.2012 JP 2012241966**

(71) Applicant: **Kyocera Corporation
Kyoto-shi
Kyoto 612-8501 (JP)**

(72) Inventors:
• **TOKUDOME, Osamu
Kyoto-shi
Kyoto 612-8501 (JP)**
• **KUBO, Keita
Kyoto-shi
Kyoto 612-8501 (JP)**
• **NISHIKAWA, Yusuke
Kyoto-shi
Kyoto 612-8501 (JP)**

(74) Representative: **Viering, Jentschura & Partner
Patent- und Rechtsanwälte
Grillparzerstrasse 14
81675 München (DE)**

(54) **HONEYCOMB STRUCTURE AND GAS PROCESSING DEVICE USING SAME**

(57) There are provided a honeycomb structure which can sufficiently maintain mechanical properties and will suffer relatively little damage of a sealing material due to heat even when collected fine particles are burned for regenerating a honeycomb structure, and a gas processing apparatus having high reliability which includes the honeycomb structure. A honeycomb structure (1) is composed of a ceramic sintered body and includes a cylindrical section (4); a partition wall section (2) having air permeability, the partition wall section (2) being disposed on an inside of the cylindrical section (4) so as to form a plurality of circulation holes (3) through which a fluid flows; a first sealing material (8) which seals openings of the plurality of circulation holes (3) on one end side of the cylindrical section (4); and a second sealing material (8) which seals openings of the plurality of circulation holes (3) on the other end of the cylindrical section (4). At least one of the first and second sealing materials (8) has pores in which a ratio (p80/p20) of a pore diameter (p80) of cumulative 80 volume% to a pore diameter (p20) of cumulative 20 volume% in a cumulative distribution curve of pore diameters is greater than or equal to 1.8 and less than or equal to 2.2.

FIG. 1

**Description**

Technical Field

The present invention relates to a honeycomb structure used in a filter or the like for purifying exhaust gas, and a gas processing apparatus using the same.

Background Art

In the related art, a filter is used for collecting fine particles or the like which are included in the exhaust gas generated from an internal combustion engine, an incinerator, a boiler or the like.

As such a filter, for example, as disclosed in Patent Literature 1, there is proposed a cordierite ceramic honeycomb filter which includes a honeycomb structure having a plurality of flow paths partitioned by a porous partition wall, and a sealing section alternatively disposed on an exhaust gas inflow side and on an exhaust gas outflow side of the flow path, allows exhaust gas to pass the porous partition wall, and removes fine particles in the exhaust gas, in which porosity of the porous partition wall is 45 to 58%, an average micropore diameter is 15 to 30 $\mu$m, a micropore volume greater than a micropore diameter of 50 $\mu$m is greater than 10% and less than or equal to 25% of the whole micropore volume, a micropore volume greater than or equal to micropore diameter of 100 $\mu$m is 1 to 8% of the whole micropore volume, a micropore volume less than a micropore diameter of 10 $\mu$m is 3 to 10% of the whole micropore volume, and a micropore distribution deviation $\sigma$ is less than or equal to 0.6 [here, $\sigma$ = log(D20) - log(D80), D20 indicates a micropore diameter ($\mu$m) in a micropore volume corresponding to 20% of the whole micropore volume in a curved line indicating a relationship between a micropore diameter and a cumulative micropore volume (a value which is obtained by accumulating a micropore volume from a maximum micropore diameter to a specific micropore diameter), and similarly, D80 indicates a micropore diameter ($\mu$m) in a micropore volume corresponding to 80% of the whole micropore volume. D80 < D20].

Citation List

Patent Literature

Patent Literature 1: Pamphlet of International Publication WO2009/048156

Summary of Invention

Technical Problem

In particular, recently, a honeycomb structure has been required in which resistance to thermal shock is high and damage due to heat is small even when collected fine particles are burned at the time of regenerating a honeycomb structure, and thus there is room for improvement on the damage in a sealing material due to the heat.

Therefore, the invention has been developed in order to solve the problem described above, and an object of the invention is to provide a honeycomb structure which is able to sufficiently maintain resistance to thermal shock and is able to suppress damage of a sealing material due to heat even when collected fine particles are burned for regenerating a honeycomb structure, and a gas processing apparatus having high reliability which includes the honeycomb structure.

Solution to Problem

A honeycomb structure of the invention is composed of a ceramic sintered body and includes a cylindrical section; a partition wall section having air permeability, the partition wall section being disposed on an inside of the cylindrical section so as to form a plurality of circulation holes through which a fluid flows; a first sealing material which seals openings of the plurality of circulation holes on one end side of the cylindrical section; and a second sealing material which seals openings of the plurality of circulation holes on the other end of the cylindrical section, in which at least one of the first sealing material and the second sealing material has pores in which a ratio $R_1$ (p80/p20) of a pore diameter (p80) of cumulative 80 volume% to a pore diameter (p20) of cumulative 20 volume% in a cumulative distribution curve of pore diameters is greater than or equal to 1.8 and less than or equal to 2.2.

In addition, a gas processing apparatus of the invention includes a case to which an exhaust tube is connected and the honeycomb structure described above in the case.

Advantageous Effects of Invention

According to the honeycomb structure of the invention, a variation in the pore diameters of the sealing material decreases, and thus even when collected fine particles are burned for regenerating the honeycomb structure, it is possible to suppress damage of the sealing material due to heat.

In addition, according to the gas processing apparatus of the invention, it is possible to efficiently collect the fine particles with high reliability over a long period of time.

Brief Description of Drawings

FIG. 1 illustrates one example of a honeycomb structure of the embodiment, wherein FIG. 1(a) is a perspective view, and FIG. 1(b) is a cross-sectional view taken along the line B-B' of FIG. 1(a);

FIG. 2 illustrates one example of an end surface of the honeycomb structure of the embodiment, wherein FIG. 2(a) is a partially enlarged view of an inflow port side, and FIG. 2(b) is a partially enlarged view of an outflow port side;

FIG. 3 illustrates another example of the end surface of the honeycomb structure of the embodiment, wherein FIG. 3(a) is a partially enlarged view of the inflow port side, and FIG. 3(b) is a partially enlarged view of the outflow port side;

FIG. 4 is one example of a distribution curve of pores existing in a partition wall section which forms the honeycomb structure of the embodiment; and

FIG. 5 is a schematic cross-sectional view of a gas processing apparatus schematically illustrating one example of the embodiment.

Description of Embodiments

Hereinafter, embodiments of a honeycomb structure and a gas processing apparatus using the same according to the invention will be described.

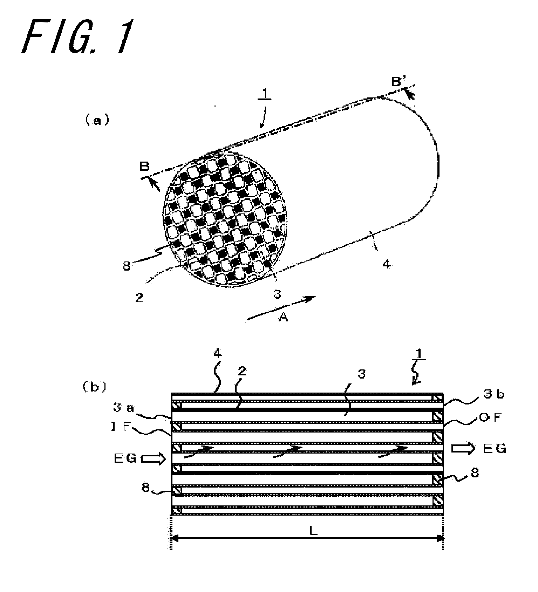

FIG. 1 illustrates one example of a honeycomb structure of the embodiment, wherein FIG. 1(a) is a perspective view, and FIG. 1(b) is a cross-sectional view taken along the line B-B' of FIG. 1(a).

A honeycomb structure 1 of an example illustrated in FIG. 1 is composed of a ceramic sintered body, and includes a cylindrical section 4, a partition wall section 2 having air permeability, the partition wall section 2 being disposed on an inside of the cylindrical section 4 so as to form a plurality of circulation holes 3 through which a fluid flows, a first sealing material 8 which seals openings of the plurality of circulation holes 3 on one end side of the cylindrical section 4, and a second sealing material 8 which seals openings of the plurality of circulation holes 3 on the other end of the cylindrical section 4.

Furthermore, in the following description, the one end side will be described as an inflow side of the fluid, and the other end side will be described as an outflow side of the fluid, but the description is not limited thereto.

For example, an internal combustion engine (not illustrated) such as a diesel engine, and a gasoline engine is connected to the inflow side of the honeycomb structure 1. When the internal combustion engine is operated, exhaust gas which is the fluid is generated, and as illustrated in FIG. 1(b), the exhaust gas is introduced from an inflow port 3a on the inflow side of the honeycomb structure 1 in which the sealing material 8 is not formed, and the outflow of the exhaust gas is blocked by the sealing material 8 formed on the outflow side. The exhaust gas of which the outflow is blocked passes through the partition wall section 2 having air permeability, and is introduced to an adjacent circulation hole 3. When the exhaust gas passes through the partition wall section 2, fine particles including carbon in the exhaust gas as a main component, fine particles including sulfate which is obtained by oxidizing sulfur as a main component, and fine particles of unburned hydrocarbon or the like formed of a polymer (hereinafter, these are collectively referred to as "fine particles") are collected on a wall surface of the partition wall section 2 and a pore surface of the partition wall section 2. The exhaust gas from which the fine particles are collected is emitted to the outside from an outflow port 3b in which the sealing material 8 is not formed in a purified state.

In the honeycomb structure 1 of the embodiment, all of the cylindrical section 4, the partition wall section 2, and the sealing material 8 are formed of a ceramic sintered body.

A main component of components constituting each of the cylindrical section 4, the partition wall section 2, and the sealing material 8 is a component having a small linear expansion coefficient, and preferably, for example, at least one of cordierite ($2MgO \cdot 2Al_2O_3 \cdot 5SiO_2$), β-eucryptite ($Li_2O \cdot Al_2O_3 \cdot 2SiO_2$), β-spodumene ($Li_2O \cdot Al_2O_3 \cdot 4SiO_2$), silicon carbide (SiC), silicon nitride ($Si_3N_4$), sialon ($Si_{6-Z}Al_ZO_ZN_{8-Z}$, here, z is greater than or equal to 0.1 and less than or equal to 1 in the amount of solid solution), mullite ($3Al_2O_3 \cdot 2SiO_2$), calcium aluminate ($CaAl_4O_7$), potassium zirconium phosphate ($KZr_2(PO_4)$), and aluminum titanate ($Al_2TiO_5$).

Here, each main component of the partition wall section 2, the cylindrical section 4, and the sealing material 8 is a component of which the content is greater than 50 mass% in 100 mass% of all components constituting each member. The identification of the component (a crystal structure) constituting each of the members may be measured by using an X-ray diffraction device. In addition, the content may be obtained by determining the content of a metal element using an Inductively Coupled Plasma (ICP) emission spectroscopic analysis device or a fluorescent X-ray analysis device, and by converting the content into oxide, carbide, and nitride on the basis of the identified crystal structure.

In addition, when all of the partition wall section 2, the cylindrical section 4, and the sealing material 8 include aluminum titanate ($Al_2TiO_5$) as a main component, it is preferable that magnesium titanate ($MgTi_2O_5$) and iron titanate ($Fe_2TiO_5$) of greater than or equal to 16 mass% and less than or equal to 24 mass% are included. Such a ratio is an optimum ratio of aluminum titanate ($Al_2TiO_5$) having excellent heat resistance, magnesium titanate ($MgTi_2O_5$) having excellent corrosion resistance, and iron titanate ($Fe_2TiO_5$) having excellent heat deterioration resistance, and is a ratio at which heat resistance, corrosion resistance, and heat deterioration resistance of each of the members become excellent.

In addition, when all of the partition wall section 2, the cylindrical section 4, and the sealing material 8 include aluminum titanate ($Al_2TiO_5$) as a main component, it is preferable that at least one of grain boundary phases of the partition wall section 2, the cylindrical section 4, and the sealing material 8 includes silicon oxide as a main component. When at least one of these grain boundary phases includes silicon oxide as a main component, crystal particles adjacent to the grain boundary phase tend to be strongly bonded to each other, and abnormal particle growth of the crystal particles is suppressed, and thus mechanical strength tends to be strong. In particular, it is preferable that the silicon oxide is greater than or equal to 90 mass% with respect to the total amount of 100 mass% of each oxide constituting the grain boundary phase.

In addition, in the honeycomb structure 1 of the embodiment, it is important that at least one of the first sealing material 8 and the second sealing material 8 has pores in which a ratio (p80/p20) of a pore diameter (p80) of cumulative 80 volume% to a pore diameter (p20) of cumulative 20 volume% in a cumulative distribution curve of pore diameters is greater than or equal to 1.8 and less than or equal to 2.2. According to such a configuration, a variation in the pore diameter of the sealing material 8 becomes small, and thus it is possible to increase mechanical strength, and it is possible to suppress damage in the sealing material due to heat even when collected fine particles are burned for regenerating the honeycomb structure 1.

Furthermore, the sealing material 8 which seals the outflow port collects more fine particles than the sealing material 8 which seals the inflow port, and thus when the collected fine particles are burned and removed, high heat dissipation properties are required, and therefore, in particular, it is preferable that the pore in the sealing material 8 which seals the outflow port has the configuration described above, and it is preferable that the one end side is the inflow side and the other end side is the outflow side.

Furthermore, in the honeycomb structure 1 of the example illustrated in FIG. 1, one of the sealing materials 8 is formed on an end surface on the inflow side, and may not be formed on the end surface on the inflow side but may be formed on a position intruding into the center side from the end surface.

Furthermore, in FIG. 1, an example is illustrated in which the circulation hole is formed in the shape of a grid, but the shape of the circulation hole 3 is not limited thereto.

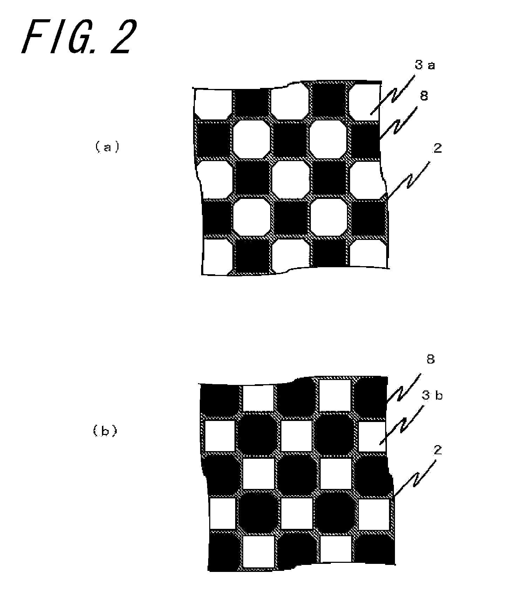

For example, FIG. 2 illustrates one example of the end surface of the honeycomb structure of the embodiment, wherein FIG. 2(a) is a partially enlarged view of the inflow port side, and FIG. 2(b) is a partially enlarged view of the outflow port side. In the example illustrated in FIG. 2, opening shapes of the circulation holes 3 in the end surface are a square and an octagon, respectively.

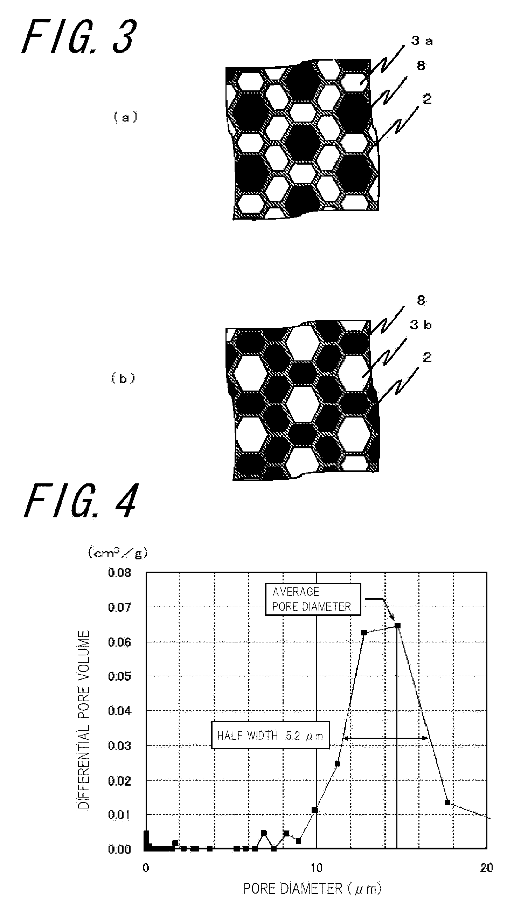

FIG. 3 illustrates another example of the end surface of the honeycomb structure of the embodiment, wherein FIG. 3(a) is a partially enlarged view of the inflow port side, and FIG. 3(b) is a partially enlarged view of the outflow port side. In the example illustrated in FIG. 3, opening shapes of the circulation holes 3 in the end surface are a flattened hexagon and a regular hexagon, respectively.

The honeycomb structure having such a shape may be used according to the purpose of the use.

In addition, in the honeycomb structure 1 of the embodiment, it is preferable that the partition wall section 2 has pores in which a ratio (p80/p20) of a pore diameter (p80) of cumulative 80 volume% to a pore diameter (p20) of cumulative 20 volume% in a cumulative distribution curve of pore diameters is greater than or equal to 1.1 and less than or equal to 1.5. According to such a configuration, a variation in the pore diameter of the partition wall section 2 is small, and thus it is possible to increase mechanical properties, and it is possible to suppress damage of the partition wall section 2 due to heat even when the collected fine particles are burned for regenerating the honeycomb structure 1.

In addition, in the honeycomb structure 1 of the embodiment, it is preferable that a half width of the pore of the partition wall section 2 with respect to a pore diameter (p50) of cumulative 50 volume% in the cumulative distribution curve of pore diameters is smaller on the inside of the cylindrical section 4 than on the outside of the cylindrical section 4. When the exhaust gas including the fine particles inflows into a cylindrical body (not illustrated) in which the honeycomb structure 1 is disposed and of which both end sections are in the shape of a circular truncated cone, the flow rate is greater on the inside of the honeycomb structure 1 than the outside of the honeycomb structure 1. Then, when the fine particles are collected by repeating the flow of the exhaust gas, a collected amount of the fine particles is greater on the inside than on the outside, and thus a pressure loss easily increases, but when the honeycomb structure 1 has the configuration described above, the variation in the pore diameter of pores of the partition wall section 2 disposed on the inside is suppressed, and thus it is possible to suppress an increase in a pressure loss on the inside to the same degree of an increase in a pressure loss on the outside. Therefore, it is possible to suppress an increase in a pressure loss in the entire honeycomb structure.

Furthermore, the outside of the partition wall section 2 indicates a region within 15% of an outer diameter of the honeycomb structure 1 toward the center of the cylindrical section 4 from an inner surface, and the inside indicates a region on the center side of the honeycomb structure 1 excluding the region of the outer diameter.

Here, the pore diameters (p20), (p50), and (p80) of each of the sealing material 8 and the partition wall section 2, for example, may be obtained by determining the pore diameter of each of the members by using the following Expression (1), and by setting the pore diameter corresponding to cumulative 25 volume%, 50 volume%, and 80 volume% in the cumulative distribution curve as the pore diameters (p20), (p50), and (p80). Furthermore, the cumulative distribution curve of pore diameters indicates a curved line illustrating a cumulative distribution of the pore diameter when a horizontal axis in a two-dimensional graph is the pore diameter and a vertical axis is a percentage of a cumulative pore volume of the pore diameter, and indicates a distribution range of the pore diameter.

The pore diameters (p20), (p50), and (p80) of the pores in these members may be obtained in accordance with a mercury intrusion method. Specifically, first, one specimen is cut from an arbitrary target position of each of the members such that a mass from each of the members is greater than or equal to 2 g and less than or equal to 3 g. (Here, when the one specimen is not cut such that the mass is within the mass range described above, a plurality of specimens may cut such that the mass is adjusted to be within the mass range described above.) Next, mercury intrudes the pore of the specimen by using a mercury intrusion porosimeter, and the pressure applied to mercury and the volume of mercury intruding the pore are measured.

The volume of mercury is identical to the volume of the pore, and the following Expression (1) (a relational expression of Washburn) is established between the pressure applied to mercury and the pore diameter.

$$p = -4\sigma\cos\theta \; / \; P...(1)$$

Here, p: Pore Diameter (m)
P: Pressure Applied to Mercury (Pa)
$\sigma$: Surface Tension of Mercury (0.485 N/m)
$\theta$: Contact Angle between Mercury and Surface of Pore

(130°) Each pore diameter p with respect to each pressure P is obtained from Expression (1), and a distribution of the respective pore diameters p and a cumulative pore volume are able to be conduced. Then, the pore diameters (p20), (p50), and (p80) of which the percentage of the cumulative pore volume corresponds to 20 volume%, 50 volume%, and 80 volume%, respectively, may be obtained.

FIG. 4 is one example of a distribution curve of the pore existing in the partition wall section which forms the honeycomb structure of the embodiment. A horizontal axis and a vertical axis of the distribution curve are the pore diameter (unit: $\mu$m) of the pore existing in the partition wall section 2 and a differential pore volume (unit: cm$^3$/g), respectively. Here, the differential pore volume indicates an amount of change in the pore volume with respect to an amount of change in the pore diameter, and generally indicates $\Delta V / (\Delta \text{Log} p)$. Here, V and p are the pore volume (cm$^3$/g) and the pore diameter ($\mu$m), respectively, and a half width indicates the width of the pore diameter having a half value of the differential pore volume indicating the pore diameter (p50).

In the distribution curve of the pore of the example illustrated in FIG. 4, the pore diameter (p50) of the partition wall section 2 is 14.8 $\mu$m, and the half width with respect to the average pore diameter is 5.2 $\mu$m.

However, in the honeycomb structure 1 of the embodiment of the example illustrated in FIG. 1, it is preferable that the sealing material 8 has porosity of greater than or equal to 50 volume% and less than or equal to 65 volume%, and is formed of a porous ceramic sintered body having the pore diameter (p50) of greater than or equal to 12 $\mu$m and less than or equal to 18 $\mu$m.

In addition, it is preferable that the partition wall section 2 has porosity of greater than or equal to 35 volume% and less than or equal to 65 volume%, and is formed of a porous ceramic sintered body having the pore diameter (p50) of greater than or equal to 5 $\mu$m and less than or equal to 26 $\mu$m. When the porosity of the ceramic sintered body forming the partition wall section 2 and the pore diameter (p50) are within this range, it is possible to suppress an increase in a pressure loss, and the pore diameter (p50) and the porosity may be obtained in accordance with the mercury intrusion method.

In addition, in the honeycomb structure 1 of the embodiment, it is preferable that an area ratio of the grain boundary phase in the second sealing material 8 is smaller than an area ratio of the grain boundary phase in the first sealing material in cross sections of the first sealing material 8 and the second sealing material 8. In particular, it is preferable that a difference between the area ratios of the grain boundary phases is greater than or equal to 0.4% and less than or equal to 0.8%. The honeycomb structure 1 collects most of the fine particles by the partition wall section 2, and collects the fine particles by the sealing material 8 which seals the outflow port 3b. Accordingly, when the collected fine particles are burned and removed, the temperature of the sealing material 8 which seals the outflow port 3b is prone to be higher than the temperature of the sealing material 8 which seals the inflow port 3a. Then, according to the configuration described above, a ratio of the grain boundary phase having low heat resistance is relatively smaller in the sealing material 8 on the outflow port 3b side than in the sealing material 8 on the inflow port 3a side. Therefore, even when the collected fine particles are burned and removed, it is possible to suppress damage of the sealing material which seals the outflow port 3b due to heat.

Furthermore, the fine particles included in the exhaust gas which is emitted from the gasoline engine are finer than the fine particles included in the exhaust gas emitted from the diesel engine, and thus when the area ratio of each of the grain boundary phases constituting the sealing material 8 is smaller on the outflow port 3b side than on the inflow port 3a side, it is particularly effective that the gasoline engine is connected to the inflow side of the honeycomb structure 1.

In order to determine the area ratio of the grain boundary phase, first, a reflected electron image of the cross sections of the sealing materials 8 which seal the inflow port 3a and the outflow port 3b which cross sections are subjected to mirror finishing, is captured by using a scanning electron microscope. Then, a crystal phase and a grain boundary phase which are captured as the reflected electron image are binarized, and a ratio of the area of the grain boundary phase to 100% of the area combining the crystal phase with the grain boundary phase may be set as the area ratio of the grain boundary phase. Furthermore, for example, the magnification may be 3000 times, and a capturing range may have a width of 18 $\mu$m and a length of 12 $\mu$m such that the pore is not included in the reflected electron image.

In addition, such a honeycomb structure 1, for example, is in the shape of a cylinder in which an outer diameter D is 140 to 270 mm, a length L in an axial direction A is 100 to 250 mm, and cylindricality is less than or equal to 2.5 mm, the number of circulation holes 3 in a cross section which is perpendicular to the axial direction A is 5 to 124 (32 to 800 CPSI) per 100 mm$^2$. In addition, the thickness of the partition wall section 2 is greater than or equal to 0.05 mm and less than or equal to 0.25 mm, and the thickness of the sealing material 8 is greater than or equal to 1 mm and less than or equal to 5 mm. Furthermore, CPSI indicates Cells Per Square Inches.

In addition, in the honeycomb structure 1 of the example illustrated in FIG. 1, it is preferable that the diameter of the circulation hole 3 which is not sealed is greater than or equal to 1.55 times and less than or equal to 1.95 times as large as the diameter of the circulation hole 3 which is sealed in the inflow side end surface (IF). Thus, by setting the diameter ratio to be greater than or equal to 1.55 times, a surface area of each of the partition wall section 2 and the sealing material 8 by which the fine particles are able to be adsorbed increases, and thus it is possible to increase the collected amount of the fine particles, and by setting the diameter ratio to be less than or equal to 1.95 times, the partition wall section 2 is not extremely thinned, and thus mechanical strength is less prone to be impaired. Here, each diameter of the circulation hole 3 indicates a diameter of an inscribed circle which is in contact with the partition wall section 2 in the inflow side end surface (IF), and is able to be measured by using an optical microscope in which the magnification, for example, is greater than or equal to 50 times and less than or equal to 100 times.

In addition, when the exhaust gas including the fine particles inflows into a cylindrical body (not illustrated) having both end section in the shape of a circular truncated cone on which the honeycomb structure 1 is disposed, the flow rate is greater on the inside of the honeycomb structure 1 than on the outside of the honeycomb structure 1. Accordingly, in the honeycomb structure 1 of the embodiment, it is preferable that an average pore diameter of the pores of the sealing material 8 which seals the inside, on the outflow port side, is greater than an average pore diameter of the pores of the partition wall section 2 disposed on the inside.

According to such a configuration, even when a crack occurs in the partition wall section 2 on the inside by frequently repeating the combustion removing of the collected fine particles, the crack is less prone to progress to the sealing material 8 on the inside, and thus it is possible to collect the fine particles over a long period of time. Here, the outflow port 3b side of the honeycomb structure 1 of the embodiment indicates a range within 10% of the entire length of the honeycomb structure 1 designating the end surface of the outflow port 3b as a starting point.

Furthermore, the average pore diameter of the pores of the sealing material 8 which seals the inside is also able to be obtained by the mercury intrusion method.

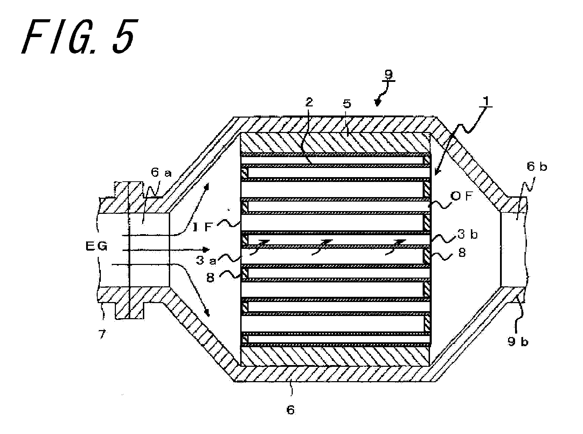

FIG. 5 is a schematic cross-sectional view of a gas processing apparatus schematically illustrating one example of the embodiment.

A gas processing apparatus 9 of the example illustrated in FIG. 5 is a gas processing apparatus which includes the honeycomb structure 1 of the embodiment carrying a catalyst (not illustrated) on a wall surface of the partition wall section 2, and allows the exhaust gas (EG) to pass by setting one end of the circulation hole 3 which is not sealed as the inflow port 3a and the other end of the other circulation hole 3 through the circulation hole 3 and the partition wall section 2 which is not sealed as the outflow port 3b, and thus collects the fine particles in the exhaust gas (EG) by mainly using the partition wall section 2. The honeycomb structure 1 is contained in a case 6 in a state where the outer circumference of the honeycomb structure 1 is retained on a heat insulating material layer 5, and the heat insulating material layer 5, for example, is formed of at least one of ceramic fiber, glass fiber, carbon fiber, and ceramic whisker.

In addition, the case 6, for example, is formed of stainless steel such as SUS303, SUS304, and SUS316, the center portion of the case 6 is in the shape of a cylinder, the both end sections are formed in the shape of a circular truncated cone, and includes an inflow port 6a of the case 6 to which the exhaust gas (EG) is supplied and an outflow port 6b from which the exhaust gas (EG) is emitted. An exhaust tube 7 is connected to the inflow port 6a of the case 6, and is configured such that the exhaust gas (EG) inflows into the case 6 from the exhaust tube 7.

An internal combustion engine (not illustrated) such as a diesel engine, and a gasoline engine is connected to the inflow side of the gas processing apparatus 9, the internal combustion engine is operated, and the exhaust gas (EG) is supplied from the exhaust tube 7 to the case 6. The exhaust gas (EG) is introduced into the circulation hole 3 on the inflow side of the honeycomb structure 1 in which the sealing material 8 is not formed, and the outflow of the exhaust gas is blocked by the sealing material 8 formed on the outflow side. The exhaust gas (EG) of which the outflow is blocked passes through the partition wall section 2 having air permeability, and is introduced to the adjacent circulation hole 3. When the exhaust gas (EG) passes through the partition wall section 2, the fine particles in the exhaust gas (EG) are collected on the wall surface of the partition wall section 2 and the surface of the pore of the partition wall section 2. The exhaust gas (EG) from which the fine particles are collected is emitted to the outside from the circulation hole 3 in which the sealing material 8 is not formed through an exhaust tube (not illustrated) in a purified state.

In such a gas processing apparatus 9, the catalyst carried on the wall surface of the partition wall section 2, for example, is at least one of a platinum group metal such as ruthenium, rhodium, palladium, iridium, and platinum, and oxides thereof, a group 11 metal of a periodic table such as gold, silver, and copper, and vanadium oxide, and when gas which is obtained by gasifying fuel such as gas oil is supplied, the fine particles in the exhaust gas which are collected by the partition wall section 2 are oxidized and burned.

In the honeycomb structure 1 of the embodiment, as described above, when the catalyst is carried on the wall surface of the partition wall section 2, the fine particles are easily burned and removed at a low temperature, and thus erosion or a crack is less prone to occur in the partition wall section 2. Further, it is preferable that the catalyst is carried not only on the wall surface but also on the surface of the pore of the partition wall section 2.

When the such a gas processing apparatus 9 of the embodiment, for example, includes the honeycomb structure 1 which is an example of the embodiment, mechanical strength of the honeycomb structure 1 is high while maintaining high efficiency of a gas treatment, and even when the collected fine particles are burned and removed, damage (a crack) is less prone to occur in the sealing material 8 and the partition wall section 2, and thus it is possible to increase reliability. Further, a carrier on which active metal is carried or a carrier on which a $NO_x$ occlusion material is carried is not necessary, and thus it is possible to realize space saving.

Furthermore, in the embodiment, an example using the exhaust gas which is in a gas state as the fluid is described, and liquid is able to be used as the fluid. For example, clean water or sewage water is able to be used as the fluid, and the gas processing apparatus of the embodiment is also able to be applied for filtering liquid.

Next, one example of a manufacturing method of the honeycomb structure 1 will be described.

When the honeycomb structure 1 formed of a ceramic sintered body which is aluminum titanate as the main component of all of the partition wall section 2, the cylindrical section 4, and the sealing material 8 is to be obtained, first, a ceramic powder in which a powder of aluminum oxide of 27 to 33 mass%, a powder of ferric oxide of 13 to 17 mass%, a powder of magnesium oxide of 7 to 13 mass%, and a remnant of a powder of titanium oxide are blended is mixed with water, acetone or 2-propanol, and thus a primary raw material is able to be obtained.

As the ceramic powder, a ceramic powder is preferable in which a particle diameter of $D_{50}$ of cumulative 50 mass% (hereinafter, $D_{50}$ of cumulative 50 mass% will be simply referred to as $D_{50}$) in the cumulative distribution curve is greater than or equal to 50 $\mu$m and less than or equal to 80 $\mu$m, and a ratio $R_1$ of a particle diameter $D_{10}$ of cumulative 10 mass% to a particle diameter $D_{50}$ of cumulative 50 mass% in the cumulative distribution curve is greater than or equal to 0.36 and less than or equal to 0.56. Furthermore, $D_{10}$ and $D_{50}$ of the ceramic powder may be measured in accordance with laser diffractometry disclosed in JIS Z 8825-1:2001(ISO 13320-1:1999).

Here, the particle diameter of $D_{50}$ is greater than or equal to 50 $\mu$m and less than or equal to 80 $\mu$m, and thus it is possible to reduce a specific surface area of the ceramic powder. Therefore, the ceramic powder is less prone to be aggregated in a molding step, mechanical properties of the ceramic madreporic body obtained by sintering the ceramic powder is less prone to decrease, and the ceramic powder having a large particle diameter decreases, and thus it is possible to easily obtain mechanical properties which are required as the ceramic madreporic body.

Further, the ratio $R_1$ is greater than or equal to 0.36 and less than or equal to 0.56, and thus an amount of existing fine ceramic powder decreases, and fine particles are able to be disposed between particles having a large diameter, and thus when such a ceramic powder is fired, sintering properties are improved, it is possible to suppress occurrence of excessively large pores, and it is possible to dispose a large pore diameter. Therefore, it is possible to have both high resistance to thermal shock and high mechanical properties.

Furthermore, it is preferable that the ceramic powder described above includes at least one of magnesium, iron, an alkali metal, and an alkali earth metal.

In addition, it is preferable that the ceramic powder has purity of greater than or equal to 99.0 mass%, and in particular, greater than or equal to 99.5 mass%.

Furthermore, when magnesium titanate ($MgTi_2O_5$) and iron titanate ($Fe_2TiO_5$) are able to be contained in aluminum titanate ($Al_2TiO_5$) in a form of a solid solution, a powder of carbonate, hydroxide, nitrate, and the like other than the powder of metal oxide may be used, and a powder of a compound thereof may be used.

Next, the obtained primary raw material is calcined at a temperature of higher than or equal to 1400°C and lower than or equal to 1500°C for greater than or equal to 1 hour and less than or equal to 5 hours in an air atmosphere, and it is possible to obtain a calcined powder formed of pseudobrookite type crystal in which elements of Ti, Al, Mg, and Fe are contained in a form of a solid solution with each other.

This calcined powder is disintegrated by using an electric attritor in which a fixed grinding stone and a rotary grinding stone are disposed to face each other in an up and down direction, and is screened by using a stainless steel mesh of which a particle size prescribed in JIS R 6001:1998 is F150. Furthermore, a particle size of the grinding stone is F24 to F46, a material of the grinding stone is aluminum oxide, an interval between grinding surfaces of the grinding stone is less than or equal to 100 $\mu$m (however, excluding 0 $\mu$m), and the number of rotations of the rotary grinding stone is greater than or equal to 100 rpm and less than or equal to 700 rpm, and thus the particle diameter of $D_{50}$ is greater than or equal to 50 $\mu$m and less than or equal to 80 $\mu$m, and it is possible to obtain the ceramic powder of which the ratio $R_1$ is greater than or equal to 0.36 and less than or equal to 0.56. Here, it is preferable that the particle size of the grinding stone is a particle size prescribed in JIS R 6001:1998, and the interval between the grinding surfaces of the grinding stone is greater than or equal to 33 $\mu$m and less than or equal to 47 $\mu$m. Then, for example, a powder of silicon oxide of which an average particle diameter is greater than or equal to 1 $\mu$m and less than or equal to 3 $\mu$m and an added amount is greater than or equal to 0.4 part by mass and less than or equal to 1.2 parts by mass with respect to 100 parts by mass of the calcined powder, and a pore forming agent such as graphite, starch or a polyethylene resin of which an added amount is greater than or equal to 1 part by mass and less than or equal to 13 parts by mass with respect to 100 parts by mass of the calcined powder are added to the classified calcined powder, and then a plasticizing agent, a lubricating agent, water, and the like are further added thereto, and thus a slurry is obtained, the slurry is put into a versatile stirrer, a rotating mill, a V type stirrer, or the like, and is stirred, and thus a kneaded product is prepared.

Furthermore, in order to obtain the honeycomb structure including the partition wall section 2 of which a pore diameter ratio (p80/p20) is greater than or equal to 1.1 and less than or equal to 1.5, a pore forming agent in the shape of a sphere of which a ratio $D_2$ ($d_{80}/d_{20}$) of a particle diameter ($d_{80}$) of cumulative 80 volume% to a particle diameter ($d_{20}$) of cumulative 20 volume% in the cumulative distribution curve is greater than or equal to 1.05 and less than or equal to 1.45 may be used.

Then, the prepared kneaded product is further kneaded by using a three roll mill, a kneader, or the like, and thus a plasticized green body is able to be obtained.

Next, the green body is molded by using an extruder including a screw which extrudes the green body. A molding die is mounted on the extruder, and the molding die has an inner diameter determining an outer diameter of the compact which is, for example, greater than or equal to 155 mm and less than or equal to 300 mm, and includes a slit for forming the partition wall section 2 and the cylindrical section 4 of the honeycomb structure 1.

Then, the green body is put into the extruder on which the molding die described above is mounted, a pressure is applied thereto, and thus a compact in the shape of a honeycomb is prepared, the obtained compact is dried, and is cut to have a predetermined length.

Furthermore, the half width of the pore existing in the partition wall section 2 with respect to the pore diameter (p50) is easily affected by the pressure of the mold and the number of rotations of the screw, and in order to set the half width to be smaller on the inside than on the outside, the pressure and the number of rotations of the screw may be greater than or equal to a predetermined threshold value, and in order to obtain the honeycomb structure 1 of the embodiment of which the half width is smaller on the inside than on the outside, for example, the pressure may be greater than or equal to 10 MPa and less than or equal to 15 MPa and the number of rotations of the screw may be greater than or equal to 150 rpm and less than or equal to 300 rpm.

Next, the sealing material 8 which alternatively seals each of the inflow side and the outflow side of a plurality of circulation holes 3 in the cut compact is prepared. Specifically, first, a portion of an outflow side end surface (OF) which is sealed by the sealing material 8 is masked in a checkered pattern, and the outflow side end surface (OF) side of the compact is immersed in the slurry. The slurry is obtained by adding, for example, the powder of silicon oxide of which the average particle diameter is greater than or equal to 1 $\mu$m and less than or equal to 3 $\mu$m and the added amount is greater than or equal to 0.4 part by mass and less than or equal to 1.2 parts by mass with respect to 100 parts by mass of the calcined powder, and the pore forming agent such as graphite, starch or the polyethylene resin of which the added amount is greater than or equal to 1 part by mass and less than or equal to 13 parts by mass with respect to 100 parts by mass of the calcined powder, to the classified calcined powder described above, and then by further adding a dispersing agent, water, or the like thereto and mixing them.

Here, in order to obtain the honeycomb structure 1 including the sealing material 8 of which the pore diameter ratio (p80/p20) is greater than or equal to 1.8 and less than or equal to 2.2, the pore forming agent in the shape of a sphere of which the ratio $D_1$ ($d_{80}/d_{20}$) of the particle diameter ($d_{80}$) of cumulative 80 volume% to the particle diameter ($d_{20}$) of cumulative 20 volume% in a cumulative distribution curve of particle diameters of the pore forming agent is greater than or equal to 1.7 and less than or equal to 2.1 may be used.

In addition, in order to obtain the honeycomb structure 1 of which the average pore diameter of the pores of the sealing material 8 which seals the inside, on the outflow port 3b side, is greater than the average pore diameter of the pores of the partition wall section 2 disposed on the inside, the pore forming agent added to the slurry for forming the sealing material 8 may be a pore forming agent of which the particle diameter ($d_{50}$) of cumulative 50 volume% in the cumulative distribution curve is greater than that of the pore forming agent added to the slurry for forming the partition wall section 2.

Furthermore, the circulation hole 3 which is not masked includes a tip end section covered with a resin having water repellency from an inflow side end surface (IF), a pin of which a tip end section is formed to be flat is inserted in advance, and the slurry intruding the circulation hole on the outflow side is dried at normal temperature. Thus, the sealing material 8 on the outflow side of the compact is formed. Then, the pin is pulled out, and the sealing material 8 is formed with performing the same operation as the operation described above with respect to the inflow side of the compact.

Furthermore, in order to obtain the honeycomb structure of which the area ratio of the grain boundary phase constituting each of the sealing materials 8 is smaller on the outflow port 3b side than on the inflow port 3a side in the cross section of the sealing material 8 which seals each of the inflow port and the outflow port, the added amount of the powder of silicon oxide to the slurry forming the sealing material 8 on the outflow port 3b side may be set to be smaller than the added amount of the powder of silicon oxide to the slurry forming the sealing material 8 on the inflow port 3a side.

Next, the obtained compact is fired while retaining it in a firing furnace at a temperature of 1300°C to 1500°C for approximately 2 hours to 10 hours, and thus it is possible to obtain the honeycomb structure 1 of the embodiment.

Next, when the honeycomb structure 1 formed of a ceramic sintered body which is cordierite as the main component of all of the partition wall section 2, the cylindrical section 4, and the sealing material 8 is to be obtained, a cordierited raw material such as kaolin, calcined kaolin, alumina, aluminum hydroxide, silica, talc, or baked talc is blended such that a composition of cordierite in the sintered body is $SiO_2$ of 40 to 56 mass%, $Al_2O_3$ of 30 to 46 mass%, and MgO of 12 to 16 mass%, and thus a ceramic powder is obtained. Hereinafter, steps before obtaining the honeycomb structure 1 are identical to that in a case where the main component is aluminum titanate except that a firing temperature is changed from a range of 1300°C to 1700°C to a range of 1350°C to 1450°C.

In the honeycomb structure 1 prepared therefrom, a variation in the pore diameter of the sealing material 8 and the partition wall section 2 becomes small, and thus it is possible to increase both resistance to thermal shock and mechanical properties, and therefore, even when the combustion removing of the collected fine particles is frequently repeated, damage (a crack) is less prone to occur in the sealing material 8 and the partition wall section 2.

Further, in order to obtain the honeycomb structure 1 carrying the catalyst on the wall surface of the partition wall section 2, the honeycomb structure 1 which is obtained by the manufacturing method described above may be immersed in a slurry formed of the catalyst, for example, a soluble salt of a platinum group metal such as ruthenium, rhodium, palladium, osmium, iridium, and platinum, a binder such as polyvinyl alcohol, and water, and then may be dried by maintaining a temperature of higher than or equal to 100°C and lower than or equal to 150°C for greater than or equal to 1 hour and less than or equal to 48 hours.

Here, as the soluble salt, for example, palladium nitrate ($Pd(NO_3)_2$), rhodium nitrate ($Rh(NO_3)_3$), ruthenium chloride ($RuCl_3$), chloroiridic acid ($H_2IrCl_6 \cdot nH_2O$), chloroplatinic acid ($H_2PtCl_6 \cdot nH_2O$), dinitrodiammine platinum ($Pt(NO_2)_2(NH_3)_2$), and the like are included, and the soluble salt may be selected according to a catalyst to be carried.

Then, after the drying, a heat treatment at a temperature of higher than or equal to 600°C and lower than or equal to 700°C for greater than or equal to 2 hours and less than or equal to 4 hours is carried out, and thus it is possible to obtain the honeycomb structure 1 carrying the catalyst on the wall surface of the partition wall section 2.

In addition, when at least one of ZSM-5, ZSM-11, ZSM-12, ZSM-18, ZSM-23, MCM zeolite, mordenite, faujasite, ferrierite, and zeolite beta which is a catalyst for occlusion and reduction of nitrogen oxides (NOx) is carried on at least one of the wall surface of the partition wall section 2 and the surface of the pore of the partition wall section 2, at least one selected from an alkali metal, an alkali earth metal, and a rare earth metal may be added to the slurry in addition to a platinum group metal.

Then, the outer circumference of the honeycomb structure 1 prepared by the method described above is contained in the case 6 in a state of being covered with the heat insulating material layer 5, and then the exhaust tube 7 is connected to the inflow port 6a of the case 6 and the exhaust tube (not illustrated) is connected to the outflow port 6b of the case 6, and thus it is possible to obtain the gas processing apparatus 9 of the embodiment of the example illustrated in FIG. 5.

Hereinafter, examples of the invention will be described in detail, but the invention is not limited to the examples. Furthermore, in the following examples, the one end side is the inflow side of the fluid, and the other end side is the outflow side of the fluid.

Example 1

First, a slurry obtained by mixing a ceramic powder in which 30 mass% of a powder of aluminum oxide, 15 mass% of a powder of ferric oxide, 10 mass% of a powder of magnesium oxide, and a remnant of a powder of titanium oxide were blended with water was dried by a spray dry method, and thus granules having an average particle diameter of 175 $\mu$m was obtained. Here, purity of each powder was 99.5 mass%.

Next, the obtained granules were calcined at a temperature of 1450°C for 3 hours in an air atmosphere, and thus a calcined powder formed of pseudobrookite type crystal in which elements of Ti, Al, Mg, and Fe were contained in a form of a solid solution with each other was obtained.

The calcined powder passed through a stainless steel mesh sieve having a particle size of F150 prescribed in JIS R 6001:1998, and thus the calcined powder which was classified as a calcined powder having a particle diameter of less than or equal to 61 $\mu$m was obtained. Then, a powder of silicon oxide of which an average particle diameter was 2 $\mu$m and an added amount was 0.8 part by mass with respect to 100 parts by mass of the calcined powder, and starch of which an added amount was 7 parts by mass with respect to 100 parts by mass of the calcined powder were added to the classified calcined powder, a slurry was obtained by further adding a plasticizing agent, a lubricating agent, and water thereto, the slurry was put into a versatile stirrer and was stirred, and thus a kneaded product was prepared.

Here, starch was in the shape of a sphere and a ratio ($d_{80}/d_{20}$) of a particle diameter ($d_{80}$) of cumulative 80 volume% to a particle diameter ($d_{20}$) of cumulative 20 volume% in a cumulative distribution curve of particle diameters of starch was 2.2. Then, the kneaded product was kneaded by using a kneader, and a plasticized green body was obtained.

Next, the green body was molded by using an extruder including a screw extruding the green body. A molding die was mounted on the extruder, and as the molding die, a molding die was used in which an inner diameter determining an outer diameter of a compact was 170 mm, and a slit for forming the partition wall section 2 and the cylindrical section 4 of the honeycomb structure 1 was included.

Then, the green body was put into the extruder on which the molding die described above was mounted, a pressure was applied thereto, and thus a compact in the shape of a honeycomb was prepared, the obtained compact was dried, and was cut to have a length of 168 mm.

Next, the portion of the outflow side end surface (OF) which was sealed by the sealing material 8 was masked in a checkered pattern, and then the outflow side end surface (OF) side of the compact was immersed in the slurry. The slurry was obtained by adding a powder of silicon oxide of which an average particle diameter was less than or equal to 2 $\mu$m and an added amount was 0.8 part by mass with respect to 100 parts by mass of the calcined powder, and starch of which an added amount was 7 parts by mass with respect to 100 parts by mass of the calcined powder to the classified calcined powder described above, and then by further adding a dispersing agent and water thereto and mixing them.

Then, a pin including a tip end section which was covered with a resin having water repellency and was formed to be flat was inserted into the circulation hole forming the sealing material 8 from the inflow side end surface (IF) in a state where the outflow side end surface (OF) of the compact was immersed in the slurry, the position of the tip end section of the pin was adjusted such that the thickness of the sealing material 8 after the firing was set to be 2.5 mm, and then the slurry intruding the circulation hole 3 on the outflow side was dried at normal temperature, and thus each of the sealing materials 8 on the outflow side of the compact was formed. Then, the pin was pulled out, and each of the sealing materials 8 on the inflow side was formed by performing the same operation as the operation described above with respect to the inflow side of the compact.

Here, starch added to the slurry for forming the sealing material 8 was in the shape of a sphere, and a ratio $D_1$ ($d_{80}/d_{20}$) of a particle diameter ($d_{80}$) of cumulative 80 volume% to a particle diameter ($d_{20}$) of cumulative 20 volume% in the cumulative distribution curve of particle diameters of starch was as shown in Table 1.

Then, the compact was fired by using an electric furnace by maintaining a firing temperature of 1380°C for 3 hours, and thus sample Nos. 1 to 12 which were honeycomb structures were obtained. Furthermore, 50 pieces were prepared for each sample.

Furthermore, the sample Nos. 1 to 12 had a length L of 117 mm in the axial direction A illustrated in FIG. 1, and the number of circulation hole per a unit area in the cross section perpendicular to the axial direction A was 300 CPSI.

Then, the pore diameters (p20) and (p80) of the sealing material 8 were obtained in accordance with the mercury intrusion method, and a pore ratio $R_1$ (p80/p20) was shown in Table 1.

In evaluation of ember of the fine particles in the honeycomb structure, a sample different from the honeycomb structure described above was prepared, each inflow side end surface (IF) of the samples was connected to a carbon generator (manufactured by Kanomax Japan Inc., Model Code S4102 (not illustrated)), dry air at a temperature of 25°C including the fine particles was sprayed toward each of the samples at a flow rate per a unit time of 2.27 Nm$^3$/minute from the generator, and 12 g of fine particles was collected with respect to a volume of 0.001 m$^3$ of the honeycomb structure 1.

Then, the collected fine particles were regenerated by being burned and removed using an electric heater.

In the regenerating, a burning temperature was 700°C and a burning time was 10 minutes, an air content supplied to the honeycomb structure was 0.07 m$^3$/minute, a region of the fine particles remaining half-burned on the outside of the inflow side end surface (IF) was denoted by a ratio of a maximum length in the radial direction designating an arbitrary point in the outer circumferential surface of the cylindrical section as a starting point in which the ember was observed to the diameter of the honeycomb structure (hereinafter, this ratio will be referred to as a ratio $R_d$), and the ratio was denoted as a ratio $R_d$ in Table 1. Furthermore, the diameter of the honeycomb structure in this example is an arithmetic average of the maximum diameter and the minimum diameter of the honeycomb structure in the outflow side end surface (IF).

In addition, the maximum length in the radial direction designating the arbitrary point in the outer circumferential surface of the cylindrical section as a starting point in which the ember was observed was measured by using an optical microscope of which the magnification was 100 times, and the diameter of the honeycomb structure was measured by using a caliper.

In addition, in evaluation of the collected amount of the sealing material of the honeycomb structure, the fine particles were collected by the same method as the method described above using a sample different from the honeycomb structure described above, and when a collected amount per a unit volume of the sealing material on the outflow side of the sample No. 6 was set to 1, the collected amount of each of the samples was shown in Table 1 as a relative value.

In addition, in order to evaluate mechanical strength of each of the samples, isostatic breakdown strength of each of the samples was measured in accordance with JASO M 505-87, and a measurement value thereof was shown in Table 1. Furthermore, each of the samples at this time was separately contained inside a rubber container of which the inner diameter was 175 mm and the height was 640 mm, a medium filled inside the container was water, and the sample was pressurized at a pressure rising rate of 0.3 MPa/minute.

Further, each of the samples was regenerated in the conditions described above, and then the collecting and the regenerating were set as one cycle, the cycle was repeated, one sample after being regenerated was cut immediately before the sealing material 8 for each cycle, the sealing material 8 was visually observed, and the number of cycles at which a crack was first observed in the sealing material 8 was shown in Table 1. Furthermore, a position at which the crack was initially confirmed was the sealing material on the outflow side in the entire sample.

[Table 1]

| Sample No. | Sealing Material on Inflow Side $D_1(d_{80}/d_{20})$ | Sealing Material on Outflow Side $D_1 (d_{80}/d_{20})$ | Sealing Material on Inflow Side $R_1(p_{80}/p_{20})$ | Sealing Material on Outflow Side $R_1 (p_{80}/p_{20})$ | Ratio $R_d$(%) | Collected Amount of Sealing Material on Outflow Side | Isostatic Breakdown Strength (MPa) | Number of Cycles at Which Crack is Observed in Sealing Material (Cycle) |
|---|---|---|---|---|---|---|---|---|
| 1 | 2.1 | 1.6 | 2.2 | 1.7 | 4.3 | 0.7 | 3.7 | 26 |
| 2 | 2.1 | 1.7 | 2.2 | 1.8 | 4.4 | 0.9 | 3.7 | 26 |
| 3 | 2.1 | 1.8 | 2.2 | 1.9 | 4.5 | 0.9 | 3.7 | 26 |
| 4 | 1.7 | 1.9 | 1.8 | 2 | 4.6 | 1 | 3.8 | 25 |
| 5 | 1.8 | 1.9 | 1.9 | 2 | 4.6 | 1 | 3.8 | 25 |
| 6 | 1.9 | 1.9 | 2 | 2 | 4.6 | 1 | 3.8 | 25 |
| 7 | 2 | 1.9 | 2.1 | 2 | 4.6 | 1 | 3.7 | 25 |
| 8 | 2.1 | 1.9 | 2.2 | 2 | 4.6 | 1 | 3.7 | 25 |
| 9 | 2.2 | 1.9 | 2.3 | 2 | 4.6 | 1 | 3.5 | 25 |
| 10 | 2.1 | 2 | 2.2 | 2.1 | 4.7 | 1.1 | 3.7 | 24 |
| 11 | 2.1 | 2.1 | 2.2 | 2.2 | 4.8 | 1.1 | 3.7 | 23 |
| 12 | 2.1 | 2.2 | 2.4 | 2.4 | 6.5 | 1.2 | 2.9 | 21 |

As shown in Table 1, in the sample Nos. 2 to 11, at least one of the sealing materials had pores of which a ratio $R_1$ (p80/p20) was greater than or equal to 1.8 and less than or equal to 2.2, and thus the collected amount of the fine particles of the sealing material 8 was maintained, and a variation in the pore diameter was small, and therefore, it was found that mechanical properties were high, it was possible to suppress damage due to heat, and it was possible to rapidly burn and remove the fine particles collected in the sealing material 8.

In particular, in the sample Nos. 2 to 8, 10 and 11, both of the sealing materials included the pore of which the ratio $R_1$ (p80/p20) was greater than or equal to 1.8 and less than or equal to 2.2, and thus a variation in the pore diameter was small, and therefore, it was found that mechanical properties were higher than that of the sample No. 9 in which only the sealing material on the outflow side was within the range described above, and it was possible to rapidly burn and remove the fine particles collected in the sealing materials.

Example 2

Next, a powder of silicon oxide of which an added amount was 0.8 part by mass with respect to 100 parts by mass of the calcined powder and an average particle diameter was 2 $\mu$m, and starch of which an added amount was 7 parts by mass were added to the calcined powder which was prepared in Example 1 and was classified as a calcined powder having a particle diameter of less than or equal to 61 $\mu$m, and then a slurry was obtained by further adding a plasticizing agent, a lubricating agent, and water thereto, the slurry was put into a versatile stirrer and was stirred, and thus a kneaded product was prepared.

Here, starch was in the shape of a sphere and a ratio $D_2$ ($d_{80}/d_{20}$) of a particle diameter ($d_{80}$) of cumulative 80 volume% to a particle diameter ($d_{20}$) of cumulative 20 volume% in the cumulative distribution curve of particle diameters of starch was shown in Table 2. Then, the kneaded product was kneaded by using a kneader, and a plasticized green body was obtained.

Then, steps before the firing were performed by the same method as the method described in Example 1, and thus sample Nos. 13 to 20 which were honeycomb structures were obtained.

Furthermore, starch added to the slurry for forming the sealing material 8 which sealed each of the inflow side end surface and the outflow side end surface was in the shape of a sphere, and a ratio ($d_{80}/d_{20}$) of a particle diameter ($d_{80}$) of cumulative 80 volume% to a particle diameter ($d_{20}$) of cumulative 20 volume% in the cumulative distribution curve of particle diameters of starch was 1.9.

Then, the pore diameters (p20) and (p80) of each of the partition wall section 2 and the sealing material 8 were obtained in accordance with the mercury intrusion method, and pore ratios $R_2$ ($p_{80}/p_{20}$) and $R_1$ ($p_{80}/p_{20}$) were shown in Table 2.

Then, 12 g of the fine particles were collected by the same method as the method described in Example 1, and then the collected fine particles were burned and removed by using an electric heater (not illustrated) disposed on the back of the outflow side end surface (OF) of the honeycomb structure 1, and thus the honeycomb structure 1 was regenerated.

In the regenerating conditions, a burning temperature and a burning time in the vicinity of the outflow side end surface (OF) were 1200°C and 10 minutes, respectively, air was supplied to the honeycomb structure 1, and a flow rate of the air per a unit time was 1.0 m$^3$/minute.

After the sample was regenerated, the fine particles were collected by the same method as the method described above.

The collecting and the regenerating were set as one cycle, the cycle was repeated, the partition wall section 2 on which the sealing material 8 was disposed was visually observed from the end surface side of the outflow side after the sample was regenerated, and the number of cycles at which a crack was first observed in the partition wall section 2 was shown in Table 2.

In addition, in evaluation of the collected amount of the partition wall section 2 of the honeycomb structure 1, the fine particles were collected by the same method as the method described above using a sample different from the honeycomb structure 1 described above, and when a collected amount per a unit volume of the partition wall section 2 of the sample No. 16 was set to 1, the collected amount of each of the samples was shown in Table 2 as a relative value.

Then, in evaluation of mechanical strength of honeycomb structure 1, the same method as the method described in Example 1 was used.

[Table 2]

| Sample No. | Partition Wall Section $D_2(d_{80}/d_{20})$ | Sealing Material on Inflow Side $R_1(p_{80}/p_{20})$ | Sealing Material on Outflow Side $R_1(p_{80}/p_{20})$ | Partition Wall Section $R_2(p_{80}/p_{20})$ | Collected Amount of Partition Wall Section | Isostatic Breakdown Strength (MPa) | Number of Cycles at Which Crack is Observed in Partition Wall Section (Cycle) |
|---|---|---|---|---|---|---|---|
| 13 | 1.02 | 2 | 2 | 1.07 | 0.9 | 4.2 | 22 |
| 14 | 1.05 | 2 | 2 | 1.1 | 1 | 4.2 | 22 |
| 15 | 1.15 | 2 | 2 | 1.2 | 1 | 4.2 | 22 |
| 16 | 1.25 | 2 | 2 | 1.3 | 1 | 4.2 | 22 |
| 17 | 1.35 | 2 | 2 | 1.4 | 1 | 4.1 | 21 |
| 18 | 1.45 | 2 | 2 | 1.5 | 1.1 | 4.1 | 21 |
| 19 | 1.55 | 2 | 2 | 1.6 | 1.1 | 4 | 20 |
| 20 | 2.2 | 2 | 2 | 2.3 | 1.2 | 3.8 | 15 |

As shown in Table 2, in the sample Nos. 14 to 18, a ratio $R_2$ (p80/p20) was greater than or equal to 1.1 and less than or equal to 1.5, and thus it was found that it was possible to maintain the collected amount of the fine particles in the partition wall section 2, mechanical strength was high, and a crack designating the partition wall section 2 as a starting point was less prone to occur.

Example 3

Next, the green body prepared in Example 2 was put into an extruder used in Example 1, a compact in the shape of a honeycomb was prepared by applying a pressure thereto, and the obtained compact was dried and was cut to have a length of 168 mm. Here, the pressure and the number of rotations of the screw were as shown in Table 3.
Then, steps before the firing were performed by the same method as the method described in Example 1, and thus sample Nos. 21 to 23 which were honeycomb structures were obtained.
Then, a specimen was cut from each of the partition wall sections 2 on the inside and on the outside of the center portion of the honeycomb structure 1 in a longitudinal direction such that a mass was 2.5 g, the pore diameter (p50) and the half width with respect to the pore diameter (p50) were obtained by the mercury intrusion method, and the value of the half width was shown in Table 3.
In addition, in a pressure loss of the honeycomb structure 1, 12 g of the fine particles was collected by the same method as the method described in Example 1, a pressure loss before and after the collecting in the outlet port end surface (OF) with respect to the inlet port end surface (IF) was measured by a manometer, and a measurement value thereof and a difference in the pressure loss before and after the collecting were shown in Table 3.

[Table 3]

| Sample No. | Pressure (MPa) | Number of Rotations of Screw (rpm) | Half Width of Partition Wall Section with respect to Pore Diameter (p50) ($\mu$m) | | Pressure Loss (kPa) | | Difference in Pressure Loss (kPa) |
|---|---|---|---|---|---|---|---|
| | | | Outer Circumference Side | Inner Circumference Side | before Collecting | after Collecting | |
| 21 | 12 | 250 | 3.8 | 5.2 | 4 | 8 | 4 |
| 22 | 12 | 120 | 4.2 | 4.2 | 4 | 9 | 5 |
| 23 | 9 | 250 | 4.2 | 4.2 | 4 | 9 | 5 |

As shown in Table 3, the half width of the sample No. 21 with respect to the pore diameter (p50) of the pore of the partition wall section 2 was smaller on the inside than on the outside, and thus it was found that an increase in a pressure loss of the entire honeycomb structure was further suppressed in the sample No. 21 than in the sample Nos. 22 and 23 of which the values of the half width on the outside and on the inside were identical to each other.

Example 4

Next, a powder of silicon oxide of which an added amount was 0.8 part by mass with respect to 100 parts by mass of the calcined powder, and starch of which an added amount was 7 parts by mass were added to the calcined powder which was prepared in Example 1 and was classified as a calcined powder having a particle diameter of less than or equal to 61 $\mu$m, and then a slurry was obtained by further adding a plasticizing agent, a lubricating agent, and water thereto, the slurry was put into a versatile stirrer and was stirred, and thus a kneaded product was prepared.

Here, an average particle diameter of the powder of silicon oxide was 2 $\mu$m, starch was in the shape of a sphere, and a ratio ($d_{80}/d_{20}$) of a particle diameter ($d_{80}$) of cumulative 80 volume% to a particle diameter ($d_{20}$) of cumulative 20 volume% in the cumulative distribution curve of particle diameters of starch was 1.35. Then, a compact in the shape of a honeycomb was prepared by the same method as the method described in Example 1, and the obtained compact was dried and was cut to have a length of 168 mm.

Next, the sealing material 8 was formed by the same method as the method in Example 1. Furthermore, the slurry for forming the sealing material 8 was obtained by adding a powder of silicon oxide of which an added amount with respect to 100 parts by mass of the calcined powder was shown in Table 4 and an average particle diameter was 2 $\mu$m, and starch of which an added amount 7 parts by mass to the classified calcined powder described above, and then by further adding a dispersing agent and water thereto and mixing them.

In addition, starch added to the slurry for forming the sealing material 8 which sealed each of the inflow port and the outflow port was in the shape of a sphere, and a ratio ($d_{80}/d_{20}$) of a particle diameter ($d_{80}$) of cumulative 80 volume% to a particle diameter ($d_{20}$) of cumulative 20 volume% in the cumulative distribution curve of particle diameters of starch was 1.9.

Then, the compact was fired by using an electric furnace by maintaining a firing temperature of 1380°C for 3 hours, and thus sample Nos. 24 and 25 which were honeycomb structures were obtained.

Then, in order to obtain an area ratio of the grain boundary phase of the sealing material 8 which sealed each of the inflow port and the outflow port, a reflected electron image of the cross section of the sealing material 8 which cross section was subjected to mirror finishing was captured by using a scanning electron microscope. Then, a crystal phase and a grain boundary phase which were captured as the reflected electron image were binarized, and the value of a ratio of the area of the grain boundary phase to 100% of the area combining the crystal phase with the grain boundary phase was shown in Table 4 as the area ratio of the grain boundary phase. Furthermore, the magnification was set to be 3000 times, and a capturing range was set to have a width of 18 $\mu$m and a length of 12 $\mu$m such that the pore was not included in the reflected electron image.

Then, in order to evaluate heat resistance of the grain boundary phase of the sealing material 8 which seals the outflow port, each of the samples was retained in an environment in which a temperature was 1100°C for 300 hours, and then was cooled. Then, by using a scanning electron microscope in which the magnification was set to be 3000 times, and an observed range was set to have a width of 18 $\mu$m and a length of 12 $\mu$m, the degree of softening of the grain boundary phase was observed, when the degree of softening was large, it was shown as "Large" in Table 4, and when the degree of softening was small, it was shown as "Small" in Table 4.

[Table 4]

| Sample No. | Slurry Forming Sealing Material of Inflow Port | Slurry Forming Sealing Material of Outflow Port | Degree of Softening of Grain Boundary Phase |
|---|---|---|---|
|  | Silicon Oxide (Part by Mass) | Silicon Oxide (Part by Mass) |  |
| 24 | 0.8 | 0.8 | Large |
| 25 | 0.8 | 0.6 | Small |

As shown in Table 4, in the sample No. 25, the area ratio of the grain boundary phase constituting each of the sealing materials 8 in the cross section of the sealing material 8 which sealed each of the inflow port and the outflow port was smaller in the outflow port than in the inflow port, and thus a ratio of the grain boundary phase having low heat resistance was relatively small, and therefore, it was found that even when the collected fine particles were burned and removed, a decrease in heat resistance of the sealing material itself which sealed the outflow port was suppressed.

Example 5

Next, a powder of silicon oxide of which an added amount was 0.8 part by mass with respect to 100 parts by mass of the calcined powder and an average particle diameter was 2 $\mu$m, and starch of which an added amount was 7 parts by mass were added to the calcined powder which was prepared in Example 1 and was classified as a calcined powder having a particle diameter of less than or equal to 61 $\mu$m, and then a slurry was obtained by further adding a plasticizing agent, a lubricating agent, and water thereto, the slurry was put into a versatile stirrer and was stirred, and thus a kneaded product was prepared.

Here, starch was in the shape of a sphere, a ratio ($d_{80}/d_{20}$) of a particle diameter ($d_{80}$) of cumulative 80 volume% to a particle diameter ($d_{20}$) of cumulative 20 volume% in the cumulative distribution curve of particle diameters of starch was 2.2, and the particle diameter ($d_{50}$) of cumulative 50 volume% was 15 $\mu$m. Then, a compact which was prepared by the same method as the method described in Example 1 was dried and cut to have a length of 168 mm.

Next, a portion of the outflow side end surface (OF) which was sealed by the sealing material 8 was masked in a checkered pattern, and the outflow side end surface (OF) side of the compact was immersed in the slurry. The slurry was obtained by adding a powder of silicon oxide of which an average particle diameter was less than or equal to 2 $\mu$m and an added amount was 0.8 part by mass with respect to 100 parts by mass of the calcined powder, starch of which an added amount was 7 parts by mass with respect to 100 parts by mass of the calcined powder to the classified calcined powder described above, and then by further adding a dispersing agent and water thereto and mixing them. Here, starch was in the shape of a sphere, the ratio ($d_{80}/d_{20}$) was 2.2, and the particle diameter ($d_{50}$) of cumulative 50 volume% was as shown in Table 5.

Then, sample Nos. 26 to 28 which were honeycomb structures were obtained by the same method as the method described in Example 1.

Then, in the outflow port side of the honeycomb structure, the pore diameter (p50) of each of the partition wall section 2 disposed on the inside and the sealing material 8 was obtained in accordance with the mercury intrusion method, and a value thereof was shown in Table 5.

In addition, the collecting and the regenerating were repeated by the same method as the method described in Example 2, the sealing material 8 of the outflow side end surface was visually observed after the regenerating, and the number of cycles at which a crack designating the sealing material 8 as a starting point was first observed was shown in Table 5.

[Table 5]

| Sample No. | Particle Diameter ($d_{50}$) of pore forming agent ($\mu$m) | | Average Pore Diameter ($p_{50}$) ($\mu$m) | | Number of Cycles at Which Crack is Observed in Sealing Material of End Surface on Outflow Side (Cycle) |
|---|---|---|---|---|---|
| | Partition Wall Section | Sealing material | Partition Wall Section | Sealing material | |
| 26 | 15 | 15 | 13.5 | 13.5 | 22 |
| 27 | 15 | 25 | 13.5 | 22.5 | 24 |
| 28 | 15 | 30 | 13.5 | 27 | 25 |

As shown in Table 5, in the sample Nos. 27 and 28, an average pore diameter of the pores of the sealing material 8 which sealed the inside, on the outflow port side, was greater than an average pore diameter of the pores of the partition wall section 2 disposed on the inside, and thus it was found that even when the combustion removing of the collected fine particles was frequently repeated, the crack was less prone to progress to the sealing material 8 disposed on the inside in the sample Nos. 27 and 28 than in the sample No. 26 in which the average pore diameter of the pores of the sealing material 8 which sealed the inside and the average pore diameter of the pores of the partition wall section 2 disposed on the inside were identical to each other, and the fine particles were able to be collected over a long period of time.

Reference Signs List

1:  Honeycomb structure
2:  Partition wall section

3: Circulation hole
4: Cylindrical section
5: Heat insulating material layer
6: Case
7: Exhaust tube
8: Sealing material
9: Gas processing apparatus

**Claims**

1. A honeycomb structure composed of a ceramic sintered body, comprising:

   a cylindrical section;
   a partition wall section having air permeability, the partition wall section being disposed on an inside of the cylindrical section so as to form a plurality of circulation holes through which a fluid flows;
   a first sealing material which seals openings of the plurality of circulation holes on one end side of the cylindrical section; and
   a second sealing material which seals openings of the plurality of circulation holes on the other end of the cylindrical section,
   at least one of the first sealing material and the second sealing material having pores in which a ratio $R_1$ (p80/p20) of a pore diameter (p80) of cumulative 80 volume% to a pore diameter (p20) of cumulative 20 volume% in a cumulative distribution curve of pore diameters is greater than or equal to 1.8 and less than or equal to 2.2.

2. The honeycomb structure according to claim 1,
   wherein the partition wall section has pores in which a ratio $R_2$ (p80/p20) of a pore diameter (p80) of cumulative 80 volume% to a pore diameter (p20) of cumulative 20 volume% in the cumulative distribution curve of pore diameters is greater than or equal to 1.1 and less than or equal to 1.5.

3. The honeycomb structure according to claim 2,
   wherein the pore of the partition wall section has a half width with respect to a pore diameter (p50) of cumulative 50 volume% in the cumulative distribution curve of pore diameters, the half width being smaller on the inside of the cylindrical section than on an outside of the cylindrical section.

4. The honeycomb structure according to any one of claims 1 to 3,
   wherein an area ratio of a grain boundary phase in the second sealing material is smaller than an area ratio of a grain boundary phase in the first sealing material in cross sections of the first sealing material and the second sealing material.

5. The honeycomb structure according to any one of claims 1 to 4,
   wherein the openings of the plurality of circulation holes which are opened on the one end side of the cylindrical body are inflow ports, and the openings of the plurality of circulation holes which are opened on the other end side of the cylindrical body are outflow ports.

6. The honeycomb structure according to claim 5,
   wherein an average pore diameter of the pores of the second sealing material which seals the inside of the cylindrical body, on the other end side of the cylindrical body, is greater than an average pore diameter of pores of the partition wall section disposed on the inside of the cylindrical body.

7. A gas processing apparatus comprising:

   a case to which an exhaust tube is connected; and
   the honeycomb structure according to any one of claims 1 to 6 in the case.

# FIG. 1

(a)

(b)

# FIG. 2

(a)

(b)

*FIG. 3*

(a)

3 a
8
2

(b)

8
3 b
2

*FIG. 4*

(cm³/g)

AVERAGE
PORE DIAMETER

HALF WIDTH 5.2 μm

DIFFERENTIAL PORE VOLUME

0.08
0.07
0.06
0.05
0.04
0.03
0.02
0.01
0.00

0          10          20

PORE DIAMETER (μm)

# FIG. 5

## INTERNATIONAL SEARCH REPORT

| International application No. |
| --- |
| PCT/JP2013/079786 |

A. CLASSIFICATION OF SUBJECT MATTER
*B01D39/20*(2006.01)i, *B01D46/00*(2006.01)i, *C04B38/00*(2006.01)i, *F01N3/022*
(2006.01)i

According to International Patent Classification (IPC) or to both national classification and IPC

B. FIELDS SEARCHED

Minimum documentation searched (classification system followed by classification symbols)
B01D39/20, B01D46/00, C04B38/00, F01N3/022

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | WO 2010/074161 A1 (Kyocera Corp.),<br>01 July 2010 (01.07.2010),<br>paragraphs [0020], [0036], [0089], [0095]; fig.<br>6<br>& EP 2383028 A1 | 1,2,5–7<br>3,4 |

☐ Further documents are listed in the continuation of Box C.       ☐ See patent family annex.

| | |
| --- | --- |
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    14 November, 2013 (14.11.13) | Date of mailing of the international search report<br>    26 November, 2013 (26.11.13) |
| --- | --- |
| Name and mailing address of the ISA/<br>    Japanese Patent Office | Authorized officer |
| Facsimile No. | Telephone No. |

Form PCT/ISA/210 (second sheet) (July 2009)

22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009048156 A